# EUROPEAN PATENT SPECIFICATION

(11) **EP 2 854 122 B1**
(45) Date of publication and mention of the grant of the patent: **11.03.2020**
(21) Application number: 14185618.7
(22) Date of filing: 19.09.2014
(51) Int. Cl.: G09G 3/20

(54) **Adjusting light emitting pixels**
Einstellung lichtemittierender Pixel
Réglage de pixels d'émission de lumière

(30) Priority: 25.09.2013 KR 20130113709
(43) Date of publication of application: 01.04.2015
(73) Proprietor: Samsung Electronics Co., Ltd., Gyeonggi-do 443-742 (KR)
(72) Inventor: Kim, Moonsoo, 443-742 Gyeonggi-do (KR); Kim, Kwangtai, 443-742 Gyeonggi-do (KR); Lee, Dasom, 443-742 Gyeonggi-do (KR)
(74) Representative: HGF Limited

(56) References cited:
- EP-A2- 2 293 273
- JP-A- 2011 033 720
- US-A1- 2007 296 685
- US-A1- 2010 201 275
- US-A1- 2011 134 252
- US-A1- 2012 212 467

## Description

### TECHNICAL FIELD

The present disclosure relates to an apparatus and a method for controlling a screen display in an electronic device.

### BACKGROUND

Electronic devices heretofore, such as mobile phones, may be configured with a touch screen panel that may integrate a display panel and a touch panel. Today's electronic devices may perform various functions and the size of their displays may vary. Such electronic devices generally use a battery and power consumption of the battery may be conserved through various techniques. The display's power consumption may make up a large portion of the device's overall power consumption. Therefore, the display panel may be switched off, when the electronic device is not in use; alternatively, the brightness of the display panel may be controlled by identifying the brightness of its surroundings using an illumination sensor. However, the illumination sensor may be installed in a specific location of the electronic device that is not optimal so that it may be difficult for the sensor to accurately detect the brightness of its surroundings. In turn, the suboptimal placement of the sensor makes it difficult to reduce battery consumption by partially switching off the display panel or controlling its brightness.

EP2293273A2 discloses a display device having integral photo-sensors for touch sensing is used to detect and mitigate the effects of veiling glare that obscures information being conveyed by the display device.

US-2007/0296685-A1 discloses a liquid crystal display device, a fabricating method, and a driving method thereof that includes at least one integrated photosensor that senses external light illumination on the liquid crystal display device.

US-2010/0201275-A1 discloses light sensing in a display device such as an OLED display.

US-2012/0212467-A1 discloses a display device including a display panel, light receiving sensors, and an image changing section. The image changing section changes an image to be displayed on a display region based on light receiving information.

### SUMMARY

In view of the foregoing, disclosed herein are an apparatus and method for controlling a screen in an electronic device.

In accordance with a first aspect of the present invention, a method according to claim 1 is provided.

In accordance with a second aspect of the present invention, an apparatus according to claim 5 is provided.

### BRIEF DESCRIPTION OF THE DRAWINGS

The above and other aspects, features, and advantages of the present disclosure will be more apparent from the following description taken in conjunction with the accompanying drawings, in which:
FIG. 1 is a block diagram illustrating an example configuration of an electronic device in accordance with aspects of the present disclosure;
FIGS. 2A to 2C are drawings illustrating an example configuration of a display unit with light-receiving pixels in accordance with aspects of the present disclosure;
FIG. 3 is a flow chart illustrating an example method of controlling a screen display in an electronic device in accordance with aspects of the present disclosure;
FIGS. 4A to 4C are drawings illustrating a method for controlling the brightness of screen display in an electronic device;
FIGS. 5A to 5C are drawings illustrating a working example of controlling a display in accordance with aspects of the present disclosure; and
FIG. 6 is a flow chart illustrating another example method for controlling a screen display in accordance with aspects of the present disclosure.

### DETAILED DESCRIPTION

Hereinafter, examples of the disclosure are described in detail with reference to the accompanying drawings. The same reference symbols are used throughout the drawings to refer to the same or like parts. Detailed descriptions of well-known functions and structures incorporated herein may be omitted to avoid obscuring the subject matter of the disclosure.

For the same reasons, some components in the accompanying drawings are emphasized, omitted, or schematically illustrated, and the size of each component does not fully reflect the actual size. Therefore, the present disclosure is not limited to the relative sizes and distances illustrated in the accompanying drawings.

An electronic device in accordance with the present disclosure may comprise a display panel having image sensors therein. Namely, the display panel may have a structure in which light-receiving pixels may be commingled with display pixels, and the entire display panel or part of the display panel may be controlled by detecting the brightness of the panel's surroundings using the light-receiving pixels.

The device may further detect the brightness of its surroundings and/or switch off an area of the display or the entire display unit based at least partially on a signal received from the light-receiving pixel.

Here, the light-receiving pixel of the display may comprise an image sensor and may identify a signal in a specific wave band. The drive control of the light-emitting pixel may include a function of changing a user interface ("UI") of the display unit in accordance with a corresponding environment.

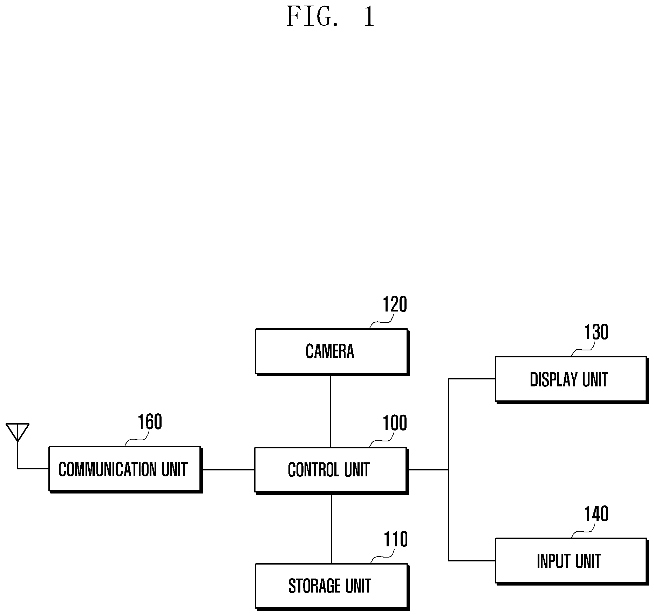

FIG. 1 is a block diagram illustrating an example configuration of an electronic device having a display unit configured with light-receiving pixels. Here, the electronic device may be configured with one of digital equipment such as a mobile phone including a smart phone, MP3 terminal, tablet PC, and laptop computer.

Referring to FIG. 1, a communication unit 160 performs a wireless communication function with a base station or an internet server. The communication unit 160 may be configured with a transmitter for up-converting a frequency of a transmitting signal and amplifying an electric power. Furthermore, communication unit 160 may comprise a receiver for low-noise amplifying and down-converting the frequency of a received signal. Further, the communication unit 160 may include a modulator and a demodulator. The modulator transmits a transmitting signal by modulating and the demodulator demodulates a signal received through the receiver. The modulator and demodulator may include at least one of an LTE, WCDMA, GSM, WIFI, WIBRO, NFC, and Bluetooth. In examples of the present disclosure, the communication unit 160 is assumed to be configured with an LTE, WIFI, and Bluetooth.

A camera 120 includes an image sensor and outputs an external image by detecting and converting the image to an electric signal and digital data. The camera 120 may be configured with a dual camera. In this case, a first camera is installed at the rear side of a device and a second camera is installed at the front bezel area of the device. The first camera may be configured with an image sensor having a higher resolution than the second camera. The first and second cameras may be controlled independently or simultaneously under the control of a control unit 100.

A display unit 130 may include light-emitting pixels for displaying a screen image and light-receiving pixels disposed commingled with the light-emitting pixels in a predetermined pattern. Here, the light-emitting pixels may be RGB pixels and the light-receiving pixels may be image sensors. The display unit 130 may display a screen of an application executing in the electronic device under the control of control unit 100. The light-receiving pixels may generate a signal indicating the surrounding brightness of the whole or partial area of the display unit 130. Such signal may be sent to the control unit 100. In one example, the light-emitting pixel of the display unit 130 may be an LCD or an OLED and the light-receiving pixel may be an image sensor. An input unit 140 generates input signals detectable by control unit 100. The display unit 130 and the input unit 140 may be configured with a touch screen panel in an integral form.

The control unit 100 controls general operations of the electronic device. Control unit 100 may comprise at least one processor which may be any number of processors, such as processors from Intel ® Corporation. In another example, the processor may be an application specific integrated circuit ("ASIC"). The control unit 100 may detect brightness by analyzing a signal detected by the light-receiving pixel of the display unit 130. The control unit 100 may adjust the brightness of the display unit 130 in accordance with the surrounding brightness read from the light-receiving pixels. Further, the control unit 100 may identify a partial area of display unit 130 that receives more or less light than other areas and may adjust the light-emitting pixels in the identified area accordingly.

A storage unit 110 may be configured with a memory for storing programs or computer executable instructions that control the brightness of display unit 130, and a data memory for storing photographed images.

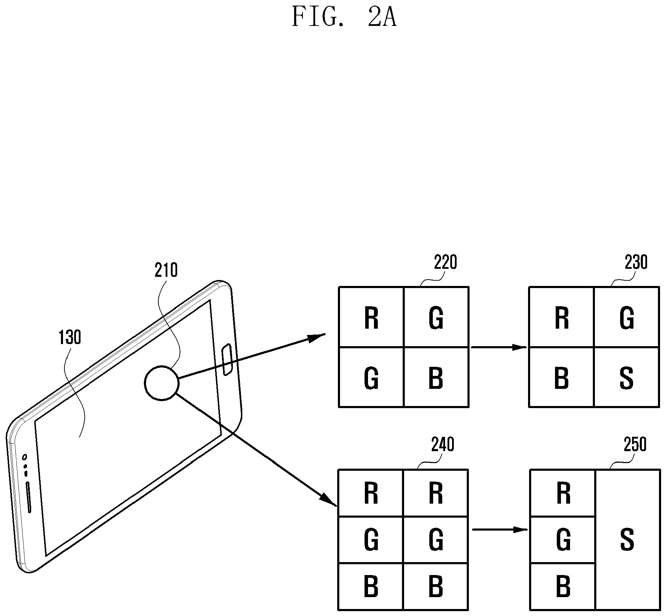

FIGS. 2A-2C illustrate an example configuration of a display unit that includes light-receiving pixels for detecting brightness.

Referring to FIG. 2A, the pixels of the example display unit 130 are configured with RGB sub-pixels and may be arranged in various forms. For example, unit pixel 210 of FIG. 2A may be a conventional unit pixel with RGBG (red, green, blue, green) sub-pixels 220 or with RGB (red, green, blue) sub-pixels 240. Here, the RGB sub-pixels 240 may be light emitting sub-pixels configured as an LCD, LED, or OLED. These light-emitting pixels may be arranged in various ways. In one example, some of the light-emitting sub-pixels in the conventional unit pixel may be replaced with a light-receiving sub-pixel S. For example, in the RGBG sub-pixels 220, a G pixel may be replaced with a light-receiving pixel S, as shown by sub-pixels 230. Regarding RGB sub-pixels 240, one column of RGB pixels may be replaced with a light-receiving sub-pixel S as shown by sub-pixels 250. Thus, a unit pixel may have different patterns of light receiving and light emitting sub-pixels.

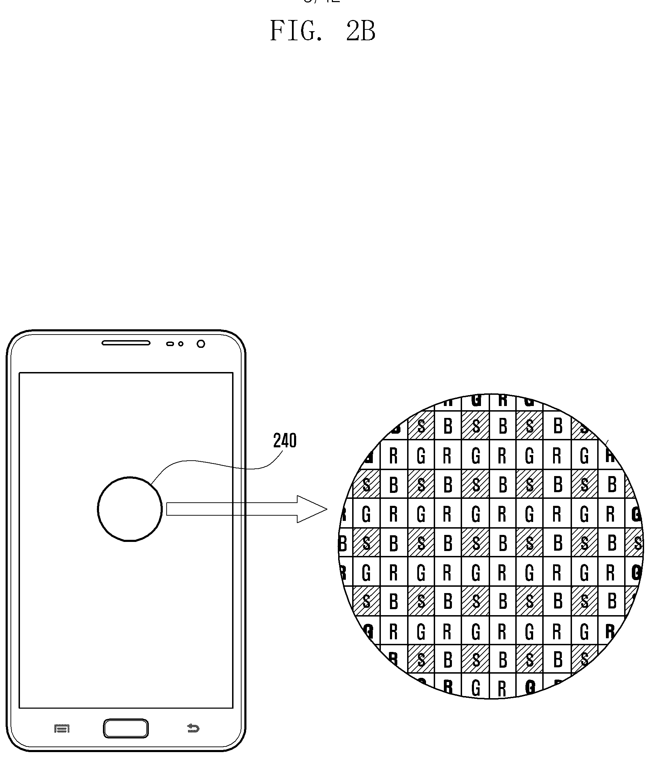

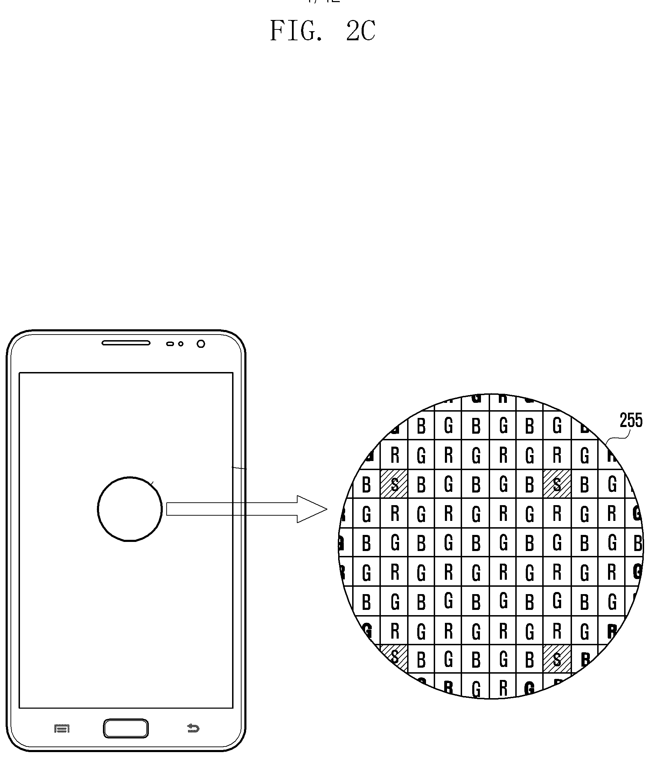

When each unit pixel 210 is configured with the pattern of sub-pixels 230, the display unit 130 may have the overall pattern shown in FIG. 2B. If the display unit 130 is configured with the pixel pattern shown in FIG. 2B, the number of light-receiving pixels increases. In turn, an increasing number of light-receiving pixels may deteriorate the quality of the graphics or pictures shown on the display. Such deterioration may be reduced by arranging a pattern of light-receiving pixels that balances the quality of the picture with the need for obtaining the brightness information. Referring to FIG. 2C, one example pattern is shown. In FIG. 2C, a light-receiving pixel may be mounted at every Nth (integer: 2, 3, 4...) position in a length and width-wise arrangement as shown in example 255. FIG. 2C illustrates an example of mounting the light-receiving pixels at every 3 unit pixels.

As shown in FIGS. 2A to 2C, the light-receiving pixels are disposed among the RGB pixels of the display unit 130 to detect light. Like a transparent display, a transparent section may be provided in certain areas of the RGB pattern and the light-receiving pixels may be mounted in these sections. Here, a light-receiving pixel of the display unit 130 may be configured with an R, G, or B pixel.

The control unit 100 may control the brightness of the display unit 130 having the above example configuration. The control unit 100 may have at least one reference or threshold value for controlling the brightness of the display unit 130 in accordance with the surrounding brightness and control data for controlling the brightness of the display unit 130 based on the reference value. Further, the control unit 100 may detect the surrounding brightness through the light-receiving pixels of the display unit 130. Since the light-receiving pixels are disposed in a predetermined pattern throughout the surface area of display unit 130, as shown in FIGS. 2B and 2C, control unit 100 may detect the brightness surrounding the surface area of display unit 130. The control unit 100 may adjust the brightness of display unit 130, based at least partially on the brightness detected by the light-receiving pixel. For example, if the brightness is less than the reference value, the brightness of the display may be decreased accordingly.

If a user or an object covers the display unit 130, the light-receiving pixels located in the covered area may not detect light. In this instance, the control unit 100 analyzes signals from the light-receiving pixels indicating that no light is detected in that particular area and switches off the light-emitting pixels located in that area. Namely, if a partial area of the display unit 130 is covered by an object, the control unit 100 may switch off the light emitting pixels in that area only while maintaining the light emitting pixels in the other areas. Accordingly, when controlling the driving of the display unit 130, the control unit 100 may simultaneously switch on an area of the display having light-receiving pixels detecting light and switch off another area of the display having light-receiving pixels not detecting light.

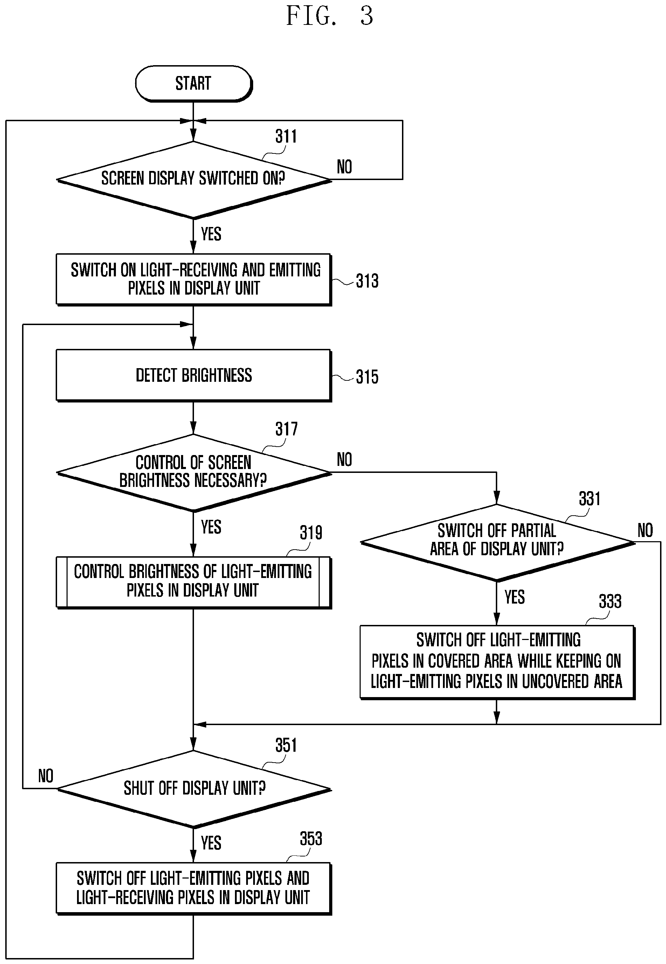

Referring now to the example method shown in FIG. 3, control unit 100 identifies whether a screen display function is activated at operation 311. In one example, the operation of switching on the screen display is performed, if a button input or a request to execute an application is detected. When activation of display unit 130 is requested, control unit 100 instructs display unit 130 to activate the light-emitting pixels and light-receiving pixels at operation 313.

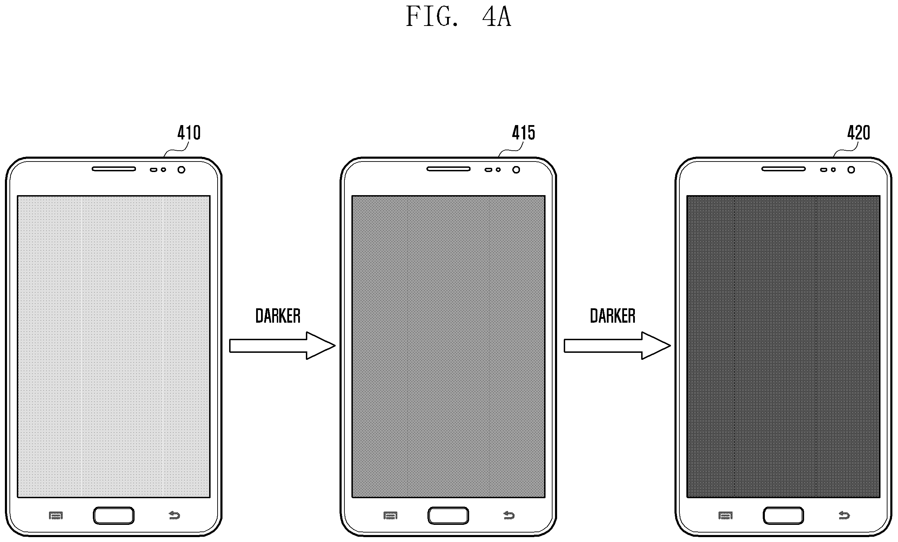

The light-receiving pixels may detect light and generate a signal to control unit 100. Control unit 100 may identify the brightness of the detected light based on the signal at operation 315. Control unit 100 may identify whether to adjust the brightness of display unit 130 by comparing the detected brightness to a predetermined threshold at operation 317. In one example, the control unit 100 identifies whether the brightness is dark enough to adjust the brightness of the display unit 130. At operation 319, the control unit 100 may adjust the screen brightness, if necessary, by adjusting the brightness of the light-emitting pixels. A method for adjusting the screen display may be performed as shown in FIGS. 4A to 4C, which is explained in more detail below.

Referring to FIG. 4A, the control unit 100 may adjust the whole screen of the display unit 130 in accordance with the brightness detected by the light receiving pixels. FIG. 4A illustrates an example of adjusting the screen brightness. If the surrounding brightness detected by the light-receiving pixels of display unit 130 is above a first and second threshold, control unit 100 may adjust the screen's brightness to a normal brightness, as shown in screenshot 410 of FIG. 4A. However, if the surrounding brightness is less than a first threshold, control unit 100 may adjust the screen brightness to be darker than normal, as shown in screenshot 415 of FIG. 4A. Furthermore, if the surrounding brightness is less than a first and second threshold, control unit 100 may adjust the screen's brightness to be even darker, as shown in screenshot 420.

As described above, control unit 100 may adjust the screen's brightness in accordance with the brightness detected by the light-receiving pixels of the display unit 130. For example, when the surrounding light becomes darker, the light-receiving pixels detects the change and control unit 100 adjusts the screen's brightness to a darker level by reducing the brightness of the light-emitting pixels.

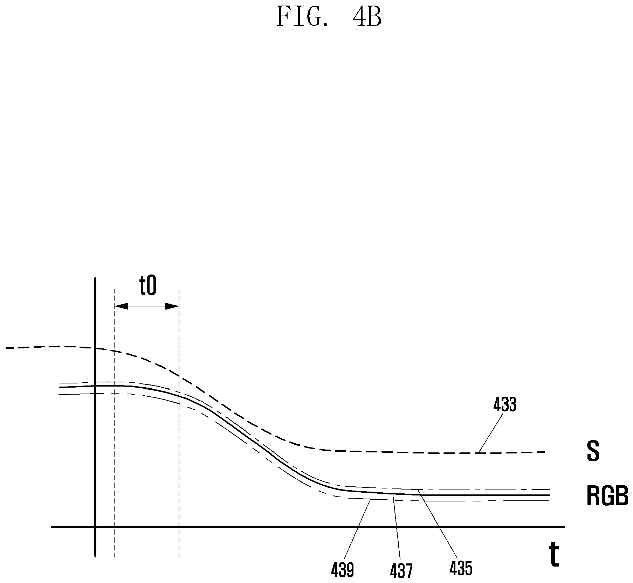

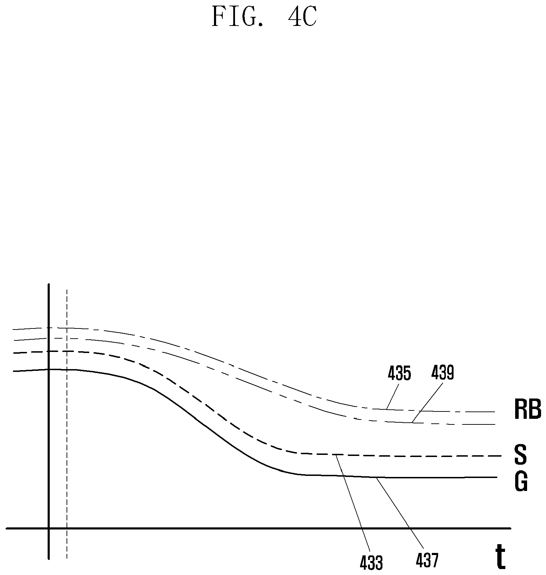

FIGS. 4B and 4C illustrate example changes in brightness of the light-emitting pixels. In FIGS. 4B and 4C, brightness line curve 433 indicates a brightness detected by a light-receiving pixel, and brightness line curves 435, 437, and 439 indicate the brightness of the R, G, B light emitting pixels respectively. Here, control unit 100 may adjust the amount of emitting light if the amount of light coming into the light-receiving pixels of the display unit 130 decreases. In this example, when the amount of light coming into the light-receiving pixels is identified, a time t0 may be required to adjust the light intensity of the light-emitting pixels. After time t0 has elapsed, control unit 100 may adjust the light intensity of the light-emitting pixels as shown in FIG. 4B. Further, the control unit 100 may control the driving of the light-emitting pixels of the display unit 130 by analyzing the wavelength of light detected by the light-receiving pixel. For example, the control unit 100 may adjust the brightness of the light-emitting pixels in accordance with the wavelength of light coming into the light-receiving pixels. FIG. 4C illustrates an example of the wavelength of light coming into a light-receiving pixel and a brightness of a G pixel in the light-emitting pixel.

Referring back to FIG. 3, control unit 100 may adjust a part of the screen in accordance with the detection of light by the light-receiving pixels in that part of the screen. For example, control unit 100 may detect that the light in an area of the display unit 130 is blocked by an object (for example, a cover or a user's hand) such that no light is being received by the light-receiving pixels in that part of the screen. Control unit 100 may detect that a part of the screen is covered at operation 331, and may switch off the light-emitting pixels in the covered part of the screen, while keeping the light emitting pixels on in the uncovered part of the screen, at operation 333. At operation 351 control unit 100 may detect whether the device is being shut off; if so, control unit 100 may switch off the light emitting pixels and light receiving pixels at operation 353.

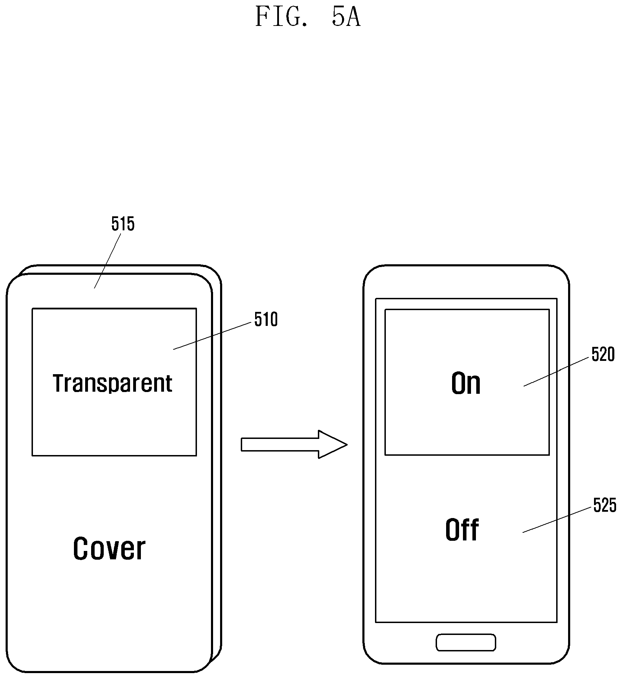

Referring now to the working example in FIG. 5A, if a screen cover 515 having an uncovered area 510 is closed at operation 331, light-receiving pixels located in the uncovered area 510 may detect the light but the light-receiving pixels blocked by the cover 515 may not detect the light. Accordingly, control unit 100 may receive signals from the light-receiving pixels located in the uncovered area 510 and the closed area and may identify that a partial area of the display unit 130 is covered at operation 331. The control unit 100 may switch on the light-emitting pixels located in the uncovered area 510 as shown by the visible screen 520 of FIG. 5A and switches off the light-emitting pixels located in the covered area 525 at operation 333. In another example, if a cover having a transparent section and an opaque section is used with the electronic device as shown by FIG. 5A, the control unit 100 may identify the transparent section by detecting the amount of light coming into the light-receiving pixels mounted in the transparent section. The control unit 100 may then switch on the light-emitting pixels located in the transparent section of the display unit 130 and switch off or reduce the brightness of the light-emitting pixels located in the opaque section.

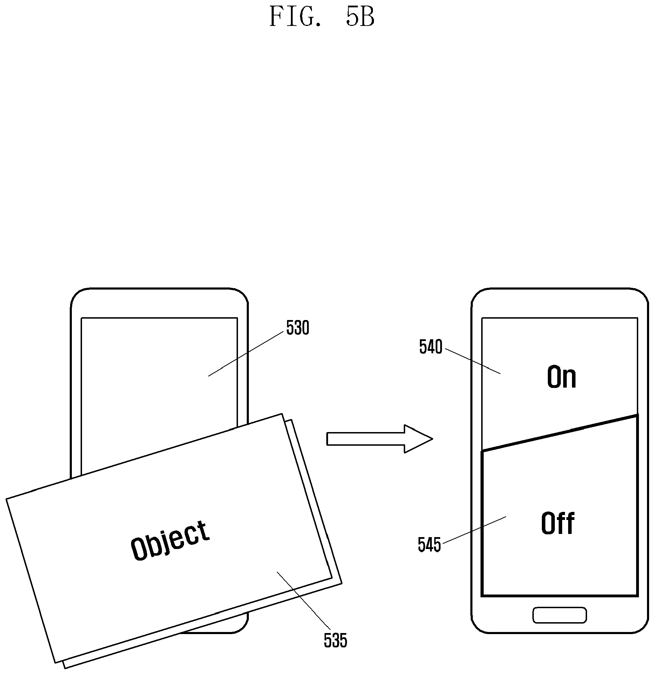

Referring now to the working example of FIG. 5B, if a partial area of the display unit 130 is covered by an opaque object 535 and the remaining area 530 is uncovered, control unit 100 may identify the area covered by the opaque object 535 by receiving signals from the light-receiving pixels covered by the object at operation 331. Control unit 100 may switch off the light-emitting pixels located in the area covered by the opaque object 535 or reduce the brightness at operation 333. Thus, control unit 100 may rearrange or resize the displayed information or data in the uncovered area 540 while maintaining the light emitting pixels off in the covered area 545.

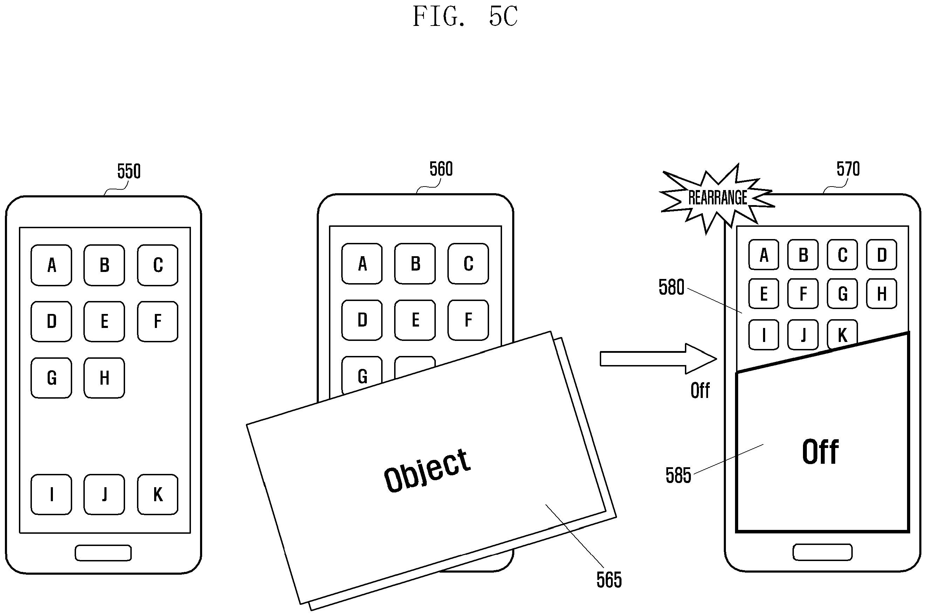

Referring now to the example of FIG. 5C, control unit 100 may detect when the object 565 covers the partial area of the display unit 130, when information is displayed, as shown by working example 550 and working example 560. The control unit 100 may then switch off or reduce the brightness of the light-emitting pixels located in the area 585 covered by the object 565, as shown by working example 570. In addition, the information displayed may be rearranged and resized to fit in the uncovered area 580 at operation 333. Accordingly, if a partial area of the display unit 130 is covered by object 565 as shown in FIG. 5C, control unit 100 may detect the covered and uncovered areas through the light-receiving pixels; reduce or shutoff the brightness of the covered area; and, rearrange and resize the information in the uncovered area. In another example, when a plurality of icons (or thumbnail images) is displayed on the screen of display unit 130, control unit 100 may switch off or reduce the brightness of the light-emitting pixels in the covered area and may rearrange and resize the icons (or thumbnail images) in the uncovered area.

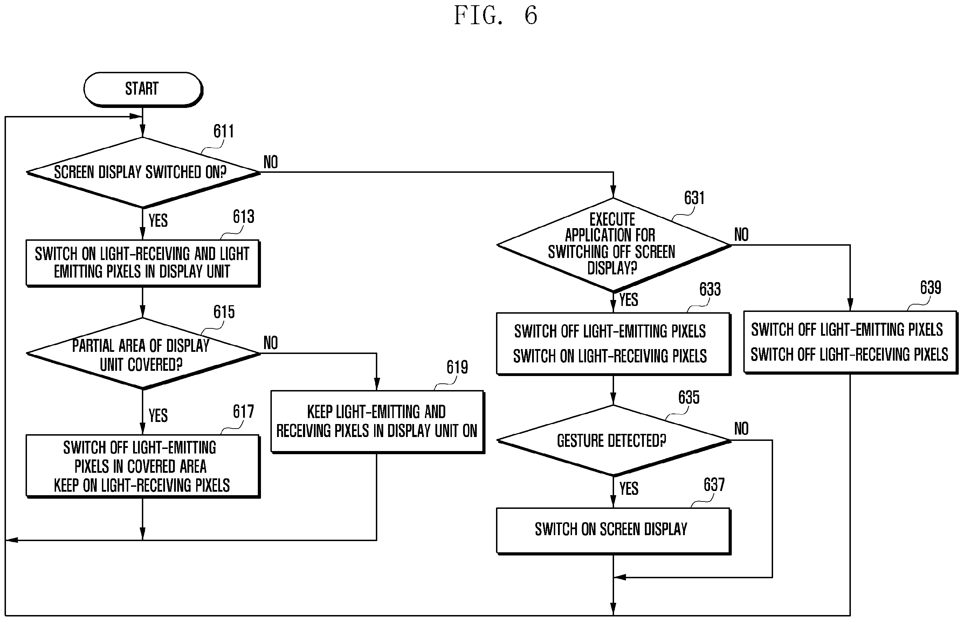

Referring now to the example method in FIG. 6, the control unit 100 may identify whether a screen display function is activated at operation 611, and activates the display unit 130 at operation 613. In one example, the operation of switching on the screen display may be performed if a button input is detected in the electronic device or an event requesting execution of an application is detected. If activation of display unit 130 is requested, the control unit 100 displays data (*e.g*., text, images, icons, thumbnails, streaming movies, *etc*.) to display unit 130. At operation 613, the light-emitting pixels of display unit 130 may be used to display the data, and the light-receiving pixels detect the surrounding light.

The light-receiving pixels may detect the surrounding light and may output signals indicative of the surrounding light's brightness to control unit 100. The light-receiving pixels may be evenly disposed in a predetermined pattern across the surface area of display unit 130. As noted above, light-receiving pixels located in a covered area of the screen may not detect the light; accordingly, control unit 100 may identify that some of the light receiving pixels are covered at operation 615. If no part of the display is covered, the light emitting pixels and the light receiving pixels may be kept on, at operation 619. At operation 617, if a part of the display is covered, the light intensity of the light emitting pixels in the covered area may be reduced or shut down, while the light intensity of the light-emitting pixels in an uncovered area may be maintained. However, if no area of the display unit 130 is covered, the control unit 100 may maintain the brightness of all the light-emitting pixels mounted across the surface area of display unit 130.

As noted above, control unit 100 may detect an area of the screen covered by a hand or an object such that control unit 100 may adjust the light-emitting pixels located in the covered area. As such, control unit 100 may reduce power consumption by identifying the light detected by the light-receiving pixels in the display unit 130 and switching off the corresponding light emitting pixels arranged in an area covered by an object (e.g., a cover, object, or user's hand), as shown in FIGS. 5A and 5B. Further, if the light-emitting pixels in the covered area are switched off, the display information may be resized and rearranged in an uncovered area, as shown in FIG. 5C.

Referring back to FIG. 6, when the screen display is switched off, control unit 100 may determine whether the screen was turned off due to the execution of a shutdown application, at operation 631; if so, control unit 100 may switch off the light emitting pixels while keeping the light receiving pixels on at operation 633. Some applications among the applications installed in the electronic device may be executable while the display unit 130 is switched off; for example, when a music playback application executes, control unit 100 may shut down the display, when no other activity has occurred for a predetermined time, to preserve battery power. At operation 635, control unit 100 may detect a gesture and, if the gesture is detected, the light emitting pixels may be turned on again at operation 637. The gestures may include, but are not limited to, a hand touch, finger touch, stylus touch, or a sweep. However, if the screen has been shut down due to the execution of a shutdown application, this indicates that the device is being shut down; in this instance, control unit 100 may switch off the light-emitting pixels and the light receiving pixels at operation 639.

The method for switching on the light-receiving pixels when the device is turned on again may be applied as described in FIG. 3.

Advantageously, the brightness surrounding an entire or partial surface area of a display may be detected. In turn, the brightness of the whole or part of the display may be adjusted in order to preserve battery life.

The above-described examples may be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer.

In addition, an artisan understands and appreciates that a "processor", "controller", "control unit" or "microprocessor" constitute hardware in the claimed invention. The functions and process steps herein may be performed automatically or wholly or partially in response to user command. An activity (including a step) performed automatically is performed in response to executable instruction or device operation without user direct initiation of the activity.

The terms "unit" or "module" referred to herein is to be understood as comprising hardware such as a processor or microprocessor configured for a certain desired functionality, or a non-transitory medium comprising machine executable code.

Although the disclosure herein has been described with reference to particular examples, it is to be understood that these examples are merely illustrative of the principles of the disclosure. It is therefore to be understood that numerous modifications may be made to the examples and that other arrangements may be devised without departing from the scope of the disclosure as defined by the appended claims. Furthermore, while particular processes are shown in a specific order in the appended drawings, such processes are not limited to any particular order unless such order is expressly set forth herein; rather, processes may be performed in a different order or concurrently and steps may be added or omitted.

## Claims

1. A method for controlling a screen display in an electronic device comprising a display unit (130) provided with a cover (515) having an uncovered area (510), the method comprising:
detecting (315) a signal from light-receiving pixels on the display unit (130), the display unit (130) comprising light-emitting pixels and light-receiving pixels commingled with the light-emitting pixels in a predetermined pattern; and
switching (333) off light-emitting pixels arranged in a partial area (525) of the display unit (130), if light-receiving pixels in the partial area (525) do not detect light and light-receiving pixels in another area (520) of the display unit (130) detect light;
wherein the partial area (525) is an area of the display unit (130) which is covered by the cover (515) when the cover (515) is closed, such that the light-receiving pixels in the partial area (525) do not detect light.

2. The method of claim 1, wherein the light-emitting pixels are RGB pixels and the light-receiving pixels are image sensors.

3. The method of claim 1, wherein data displayed on the display unit (130) is rearranged and resized into the uncovered area (520) so as to allow the data to be displayed through the uncovered area.

4. The method of claim 1, further comprising:
switching off the light-emitting pixels, when the screen display of the display unit (130) is switched off, and
displaying an execution screen of an application by turning on the light-emitting pixels, when a predetermined gesture is detected by the light-receiving pixels.

5. An apparatus for controlling a screen display in an electronic device, the apparatus comprising:
a display unit (130) provided with a cover (515) having an uncovered area (510) and comprising light-emitting pixels and light-receiving pixels disposed commingled with the light-emitting pixels in a predetermined pattern; and
a control unit (100) arranged to:
detect (315) brightness of light from light-receiving pixels; and
switch (333) off light-emitting pixels arranged in a partial area (525) of the display unit (130), if light-receiving pixels in the partial area (525) do not detect light and light-receiving pixels in another area (520) of the display unit (130) detect light;
wherein the partial area (525) is an area of the display unit (130) which is covered by the cover (515) when the cover (515) is closed, such that the light-receiving pixels in the partial area (525) do not detect light.

6. The apparatus of claim 5, wherein the light-emitting pixels are RGB light-emitting pixels.

7. The apparatus of claim 6, wherein the light-receiving pixels are image sensors.

8. The apparatus of claim 5, wherein data displayed on the display unit (130) is rearranged and resized into the uncovered area (520) of the display unit (130) so as to allow the data to be displayed through the uncovered area.

## Patentansprüche

1. Verfahren zum Steuern einer Bildschirmanzeige in einer elektronischen Vorrichtung, die eine Anzeigeeinheit (130) umfasst, die mit einer Abdeckung (515) bereitgestellt wird, die einen unbedeckten Bereich (510) aufweist, wobei das Verfahren umfasst:
ein Erfassen (315) eines Signals von Lichtempfangspixeln auf der Anzeigeeinheit (130), wobei die Anzeigeeinheit (130) Lichtemissionspixel und Lichtempfangspixel umfasst, die mit den Lichtemissionspixeln in einem vorbestimmten Muster vermischt sind; und
ein Ausschalten (333) von in einem Teilbereich (525) der Anzeigeeinheit (130) angeordneten Lichtemissionspixeln, wenn Lichtempfangspixel in dem Teilbereich (525) kein Licht erfassen und Lichtempfangspixel in einem anderen Bereich (520) der Anzeigeeinheit (130) Licht erfassen;
wobei der Teilbereich (525) ein Bereich der Anzeigeeinheit (130) ist, der von der Abdeckung (515) abgedeckt wird, wenn die Abdeckung (515) geschlossen ist, sodass die Lichtempfangspixel in dem Teilbereich (525) kein Licht erfassen.

2. Verfahren nach Anspruch 1, wobei die Lichtemissionspixel RGB-Pixel sind und die Lichtempfangspixel Bildsensoren sind.

3. Verfahren nach Anspruch 1, wobei Daten, die auf der Anzeigeeinheit (130) angezeigt werden, neu angeordnet werden und die Größe an den nicht abgedeckten Bereich (520) angepasst wird, um zu ermöglichen, dass die Daten durch den nicht abgedeckten Bereich angezeigt werden.

4. Verfahren nach Anspruch 1, das ferner umfasst:
ein Ausschalten der Lichtemissionspixel, wenn die Bildschirmanzeige der Anzeigeeinheit (130) ausgeschaltet ist, und
ein Anzeigen eines Ausführungsbildschirms einer Anwendung durch ein Einschalten der Lichtemissionspixel, wenn eine vorbestimmte Geste durch die Lichtempfangspixel erfasst wird.

5. Einrichtung zum Steuern einer Bildschirmanzeige in einer elektronischen Vorrichtung, wobei die Einrichtung umfasst:
eine Anzeigeeinheit (130), die mit einer Abdeckung (515) bereitgestellt wird, die einen nicht abgedeckten Bereich (510) aufweist und Lichtemissionspixel und Lichtempfangspixel umfasst, die mit den Lichtemissionspixeln in einem vorbestimmten Muster vermischt angeordnet sind; und
eine Steuereinheit (100) die eingerichtet ist für:
ein Erfassen (315) der Helligkeit von Licht von Lichtempfangspixeln; und
ein Ausschalten (333) von in einem Teilbereich (525) der Anzeigeeinheit (130) angeordneten Lichtemissionspixeln, wenn Lichtempfangspixel in dem Teilbereich (525) kein Licht erfassen und Lichtempfangspixel in einem anderen Bereich (520) der Anzeigeeinheit (130) Licht erfassen;
wobei der Teilbereich (525) ein Bereich der Anzeigeeinheit (130) ist, der von der Abdeckung (515) abgedeckt wird, wenn die Abdeckung (515) geschlossen ist, sodass die Lichtempfangspixel in dem Teilbereich (525) kein Licht erfassen.

6. Einrichtung nach Anspruch 5, wobei die Lichtemissionspixel RGB-Lichtemissionspixel sind.

7. Einrichtung nach Anspruch 6, wobei die Lichtempfangspixel Bildsensoren sind.

8. Einrichtung nach Anspruch 5, wobei Daten, die auf der Anzeigeeinheit (130) angezeigt werden, neu angeordnet und an die Größe des nicht abgedeckten Bereichs (520) der Anzeigeeinheit (130) angepasst werden, um zu erlauben, dass die Daten durch den nicht abgedeckten Bereich angezeigt werden.

## Revendications

1. Procédé permettant de commander un affichage à l'écran dans un dispositif électronique comprenant une unité d'affichage (130) dotée d'un couvercle (515) possédant une zone non couverte (510), le procédé comprenant :
la détection (315) d'un signal provenant de pixels de réception de lumière sur l'unité d'affichage (130), l'unité d'affichage (130) comprenant des pixels d'émission de lumière et des pixels de réception de lumière mélangés avec les pixels d'émission de lumière selon un motif prédéfini ; et
la désactivation (333) de pixels d'émission de lumière agencés dans une zone partielle (525) de l'unité d'affichage (130), si les pixels de réception de lumière dans la zone partielle (525) ne détectent pas la lumière et les pixels de réception de lumière dans une autre zone (520) de l'unité d'affichage (130) détectent la lumière ;
ladite zone partielle (525) étant une zone de l'unité d'affichage (130) qui est couverte par le couvercle (515) lorsque le couvercle (515) est fermé, de sorte que les pixels de réception de lumière dans la zone partielle (525) ne détectent pas la lumière.

2. Procédé selon la revendication 1, lesdits pixels d'émission de lumière étant des pixels RVB et lesdits pixels de réception de lumière étant des capteurs d'image.

3. Procédé selon la revendication 1, lesdites données affichées sur l'unité d'affichage (130) étant réagencées et redimensionnées dans la zone non couverte (520) de façon à permettre aux données d'être affichées à travers la zone non couverte.

4. Procédé selon la revendication 1, comprenant en outre :
la désactivation des pixels d'émission de lumière, lorsque l'affichage d'écran de l'unité d'affichage (130) est désactivé, et l'affichage d'un écran d'exécution d'une application en activant les pixels d'émission de lumière, lorsqu'un geste prédéfini est détecté par les pixels de réception de lumière.

5. Appareil destiné à commander un affichage d'écran dans un dispositif électronique, l'appareil comprenant :
une unité d'affichage (130) doté d'un couvercle (515) possédant une zone non couverte (510) et comprenant des pixels d'émission de lumière et des pixels de réception de lumière disposés mélangés avec les pixels d'émission de lumière selon un motif prédéfini ; et une unité de commande (100) agencée pour :
détecter (315) la luminosité de la lumière provenant de pixels de réception de lumière ;
et désactiver (333) les pixels d'émission de lumière disposés dans une zone partielle (525) de l'unité d'affichage (130), si les pixels de réception de lumière dans la zone partielle (525) ne détectent pas la lumière et les pixels de réception de lumière dans une autre zone (520) de l'unité d'affichage (130) détectent la lumière ; ladite zone partielle (525) étant une zone de l'unité d'affichage (130) qui est couverte par le couvercle (515) lorsque le couvercle (515) est fermé, de sorte que les pixels de réception de lumière dans la zone partielle (525) ne détectent pas la lumière.

6. Appareil selon la revendication 5, lesdits pixels d'émission de lumière étant des pixels d'émission de lumière RVB.

7. Appareil selon la revendication 6, lesdits pixels de réception de lumière étant des capteurs d'image.

8. Appareil selon la revendication 5, lesdites données affichées sur l'unité d'affichage (130) étant réagencées et redimensionnées dans la zone non couverte (520) de l'unité d'affichage (130) de façon à permettre aux données d'être affichées à travers la zone non couverte.
